# EUROPÄISCHE PATENTANMELDUNG

(11) **EP 4 589 248 A1**
(43) Veröffentlichungstag der Anmeldung: **23.07.2025**
(21) Anmeldenummer: 24152586.4
(22) Anmeldetag: 18.01.2024
(51) Int. Cl.: G01B 11/30

(54) **VERFAHREN ZUR MESSUNG EINER EIGENSCHAFT EINES STABS**

(71) Anmelder: Progress Maschinen & Automation AG, 39042 Brixen (IT)
(72) Erfinder: STUFLESSER, Alexander, 39042 Brixen (IT)
(74) Vertreter: Torggler & Hofmann Patentanwälte - Innsbruck

(57) **Zusammenfassung**

Verfahren zur Messung wenigstens einer Eigenschaft, insbesondere der Geradheit, wenigstens eines von mittels einer Richtmaschine (1), insbesondere Rotorrichtmaschine, gerichteten Stabs (2), insbesondere Bewehrungsstabs, wobei die wenigstens eine Eigenschaft des wenigstens einen gerichteten Stabs nach dem Auslauf (3) der Richtmaschine (1) mittels wenigstens einer berührungslos arbeitenden Abtastvorrichtung (4) gemessen wird, wobei der geschnittene Stab (2) in einer Ablagevorrichtung (5) abgelegt wird und die Messung der wenigstens einen Eigenschaft des Stabs (2) mittels der wenigstens einen berührungslos arbeitenden Abtastvorrichtung (4) erfolgt, während der Stab (2) in der Ablagevorrichtung (5) abgelegt ist.

## Beschreibung

Die Erfindung betrifft ein Verfahren zur Messung wenigstens einer Eigenschaft, insbesondere der Geradheit wenigstens eines von mittels einer Richtmaschine, insbesondere Rotorrichtmaschine, gerichteten Stabs, insbesondere Bewehrungsstabs, wobei die wenigstens eine Eigenschaft des wenigstens einen gerichteten Stabs nach dem Auslauf der Richtmaschine mittels wenigstens einer berührungslos arbeitenden Abtastvorrichtung gemessen wird. Weiters betrifft die Erfindung eine Vorrichtung zur Messung wenigstens einer Eigenschaft, insbesondere der Geradheit, wenigstens eines von mittels einer Richtmaschine gerichteten Stabs, insbesondere Bewehrungsstabs, wobei die Vorrichtung wenigstens eine berührungslos arbeitende Abtastvorrichtung umfasst

Richtmaschinen für die Herstellung und Bereitstellung von Stäben, Einzelstäben oder Drähten für Bewehrungen sind in vielfältiger Weise bekannt. Idealerweise sollen beim Richten absolut gerade Bewehrungsstäbe erzeugt werden. In der Praxis kommt es aber häufig vor, dass die gerichteten Drähte/Stäbe leicht gebogen sind. Dies kann vielfältige Ursachen haben, da das Ergebnis von mehreren Faktoren, wie beispielsweise dem Ausgangsmaterial, der Vorschubgeschwindigkeit, der Rotordrehzahl oder der Ausrichtung der Richtsteine/Richtdüsen abhängt.

Es wurden daher bereits Verfahren entwickelt, die darauf gerichtet sind, ein verbessertes Richtergebnis zu erzielen. In der Regel wird dabei das gerichtete Werkstück direkt nach dem Durchlaufen der Richteinheit an einer stationär angeordneten Messeinrichtung vorbeigeführt, bevor es in weiterer Folge abgeschnitten wird. Die gemessenen Werte werden dazu verwendet, um - bei Überschreitung von Toleranzwerten - die Parameter, wie Vorschubgeschwindigkeit, Rotordrehzahl oder Ausrichtung der Richtsteine/Richtdüsen, anzupassen und auf diese Weise für den nächsten Draht bzw. die nächste Charge von Drähten/Stäben ein verbessertes Richtergebnis zu erzielen.

Als nachteilig an diesem Stand der Technik hat sich herausgestellt, dass zwar mit den sehr bekannten Verfahren die Richtergebnisse durchaus verbessert werden können, eine Endkontrolle der gerichteten und geschnittenen Stäbe/Drähte jedoch nicht gegeben ist. Drähte, die also in der Produktionslinie nach dem Messvorgang verbogen werden, beispielsweise während des Schneidevorgangs oder im Auslauf der Richtmaschine, können mit den bisher bekannten Verfahren nicht aussortiert werden.

Auch berührungslos arbeitenden Abtastvorrichtung sind an sich bekannt und sind bei Richtmaschinen in der Regel direkt nach der Richteinheit angeordnet, wobei der zu vermessende Stab durch den Vorschub an der Abtastvorrichtung vorbeibewegt wird. Mit den bekannten Vorrichtungen wird also die Geradheit des gerichteten Stabes noch in der Produktionslinie gemessen, was den Nachteil mit sich bringt, dass Verformungen, die beim Durchlauf der Produktionslinie nach dem Passieren der Abtastvorrichtung auftreten, nicht mehr gemessen werden können.

Ausgehend von diesem Stand der Technik hat es sich die Erfindung zur Aufgabe gemacht, unter Vermeidung der vorgenannten Nachteile ein zumindest teilweise verbessertes Verfahren sowie eine verbesserte Vorrichtung anzugeben, wobei insbesondere eine Messung der Eigenschaft des gerichteten Stabes am Ende der Produktionslinie, insbesondere im Auslauf, sowie eine Qualitätsprüfung der gerichteten Stäbe/Drähte am Ende der Produktionslinie erreicht werden soll.

Diese Aufgabe wird gelöst durch die Merkmale der Ansprüche 1 und 9.

Dies wird beim erfindungsgemäßen Verfahren dadurch erreicht, dass der geschnittene Stab in einer Ablagevorrichtung abgelegt wird und die Messung der wenigstens einen Eigenschaft des Stabs mittels der wenigstens einen berührungslos arbeitenden Abtastvorrichtung erfolgt, während der Stab in der Ablagevorrichtung abgelegt ist.

Während also bei den bisher bekannten Verfahren die Messung der Eigenschaft des zu richtenden Werkstückes, insbesondere die Geradheit, zwischen der Richteinheit und der Schneidevorrichtung erfolgte, wird die Messung beim erfindungsgemäßen Verfahren an das Ende der Produktionslinie verlegt. Dadurch wird erreicht, dass auch Verbiegungen des Werkstückes, die in der Produktionslinie nach dem Richten, beispielsweise beim Schneidevorgang, erfolgen, gemessen werden können, wodurch mit dem Messvorgang gleichzeitig eine Bestimmung der Ausschussware und somit eine Qualitätskontrolle erreicht wird.

Gemäß einem bevorzugten Ausführungsbeispiel der Erfindung ist vorgesehen, dass zum Messen der Eigenschaft des Stabes die Lage des Stabes unverändert bleibt und die Abtastvorrichtung relativ zum Stab bewegt wird, wobei es sich für eine in der Praxis einfach umzusetzende Lösung als besonders vorteilhaft herausgestellt hatte, wenn die Abtastvorrichtung relativ zum Stab radial und/oder parallel zu einer Längsrichtung des Stabs bewegt wird.

Anders ausgedrückt wird der Stab von der Richtmaschine geradegerichtet und auf Länge geschnitten, bevor er im Auslauf abgelegt und mittels einer schwenkbaren Abtastvorrichtung vermessen wird.

Gemäß einem alternativen Ausführungsbeispiel der Erfindung ist vorgesehen, dass zum Messen der Eigenschaft des Stabes die Lage der Abtastvorrichtung unverändert bleibt und der Stab relativ zur Abtastvorrichtung vorzugsweise radial bewegt wird.

Bei diesem Ausführungsbeispiel ist also die Abtastvorrichtung am Ende der Produktionslinie stationär angeordnet und wird der zu vermessende Bewehrungsstab relativ zur Abtastvorrichtung bewegt, wobei eine platzsparende Ausführungsform dann erreicht werden kann, wenn der zu vermessende Bewehrungsstab um die eigene Achse rotiert wird und dabei mittels der berührungslos arbeitenden Abtastvorrichtung vermessen wird.

Besonders genaue Messergebnisse können dann erreicht werden, wenn die Messung der Eigenschaft mittels wenigstens eines Sensors, vorzugsweise eines abstandbasierten Lasersensors, erfolgt. Ein unkompliziert durchzuführendes Messverfahren, bei dem zudem die eingesetzten Mittel zur Durchführung des Verfahrens konstruktiv einfach ausgestaltet werden können, ergibt sich dann, wenn die Abtastvorrichtung mehrere Sensoren umfasst, wobei aus den Messwerten der einzelnen Sensoren jeweils ein Lageprofil des zu vermessenden Stabes erstellt und ein Referenzwert abgeleitet wird und die so ermittelten Referenzwerte der einzelnen Lageprofile in Relation zueinander gesetzt werden.

Anders ausgedrückt werden also die auf einer drehbaren Welle angeordneten Sensoren um den in der Ablagevorrichtung lagernden Stab geschwenkt, dabei zeichnet der Sensor während des Schwenkzyklus die Messwerte auf, wodurch sich ein Lageprofil des Stabes in Bezug auf den Schwenkwinkel ergibt. In weiterer Folge wird dann für jedes Lageprofil ein bestimmter Referenzwert abgeleitet. De facto stellen also die Referenzwerte der einzelnen Lageprofile das Messergebnis hinsichtlich der zu vermessenden Eigenschaft des Stabes dar.

Ein besonders einfaches Verfahren zum Messen der Geradheit des Stabes wird dann erzielt, wenn als Lageprofil ein Abstandsprofil des zu vermessenden Stabes in Bezug auf den Schwenkwinkel des Sensors erstellt wird und als Referenzwert der Minimalwert der sich ergebenden Kurve abgeleitet wird.

Die ermittelten Referenzwerte können in zweierlei Weise weiterverwendet werden.

Zum einen kann man zur Bestimmung von Ausschussware eine obere und eine untere Toleranzgrenze für die Referenzwerte festlegen, um Stäbe, bei denen die ermittelten Referenzwerte diese Toleranzgrenzen überschreiten, auszusortieren.

Zum anderen können die ermittelten Referenzwerte zur Erzielung eines besseren Richtergebnisses für nachfolgende Chargen von zu richtenden Stäben durch eine Anpassung der Stellparameter für die Richtmaschine verwendet werden, wenn gemäß einem weiteren Ausführungsbeispiel der Erfindung zufolge die Referenzwerte einer Regeleinrichtung für die Richtmaschine übermittelt werden und die Richtelemente der Richtmaschine in Abhängigkeit der ermittelten Referenzwerte justiert werden.

Hinsichtlich der Vorrichtung wird die Aufgabe gelöst, indem vorgesehen ist, dass die Vorrichtung eine Ablagevorrichtung für den gerichteten und geschnittenen Stab aufweist und die wenigstens eine berührungslos arbeitende Abtastvorrichtung relativ zur Ablagevorrichtung bewegbar, vorzugsweise an der Ablagevorrichtung, angeordnet ist. Eine besonders einfach zu bedienende und in der Praxis robuste Lösung wird dabei erreicht, wenn gemäß einer bevorzugten Ausführungsform der Erfindung die Abtastvorrichtung radial bewegbar, vorzugsweise schwenkbar, an der Ablagevorrichtung angeordnet ist.

Die Vorrichtung zur Messung der Eigenschaft des gerichteten Stabes ist also im Gegensatz zum Stand der Technik am Ende der Produktionslinie für den Stab im sogenannten Ausschuss der Richtmaschine angeordnet und zwar derart, dass sie frei zugänglich ist ohne dass irgendwelche arbeitenden Maschinenteile der Richtmaschine angehalten oder Maschinenelemente entfernt werden müssen, wodurch eine besonders wartungsfreundliche und den Produktionsablauf der Richtmaschine nicht beeinflussende Lösung erreicht wird.

Wenn die Abtastvorrichtung mehrere Sensoren, vorzugsweise abstandsbasierte Lasersensoren, aufweist, die auf einer drehbar gelagerten Welle angeordnet sind, ergeben sich einwandfreie, die Eigenschaft, insbesondere die Verformung des Stabes aufzeigende Daten, wobei es sich für eine zuverlässige Messung als günstig herausgestellt hat, wenn sich die Abtastvorrichtung über die gesamte Länge des zu messenden Stabes erstreckt.

Ein besonders kostengünstiges und gleichzeitig robustes Ausführungsbeispiel der Erfindung sieht vor, dass die Ablagevorrichtung eine Auflagefläche und eine Anlagefläche für den zu messenden Stab aufweist, wobei die Auflagefläche und die Anlagefläche einen Winkel kleiner 120°, vorzugsweise von 85°, einschließen und die Anlagefläche mehrere, vorzugsweise schlitzförmige Durchtrittsöffnungen aufweist. Eine besonders einfache und zuverlässige Messung der Eigenschaft des Stabes wird dann erreicht, wenn die Abtastvorrichtung auf der dem zu messenden Stab abgewandten Seite der Anlagefläche drehbeweglich gelagert ist, wobei die Sensoren der Abtastvorrichtung im Bereich der Durchtrittsöffnungen, vorzugsweise deckungsgleich, angeordnet sind.

In anderen Worten ausgedrückt, können also die Sensoren den Abstand des Stabes von der Anlagefläche durch von den schlitzförmigen Durchtrittsöffnungen gebildeten Ausschnitte gemessen werden, wobei die Messgenauigkeit bzw. der Rückschluss auf die Geradheit der Stäbe dann besonders hoch bzw. genau ist, wenn im Bereich jeder Durchtrittsöffnung ein Sensor angeordnet ist.

Wenn, wie ein weiteres Ausführungsbeispiel der Erfindung vorsieht, die Auflagefläche relativ zur Anlagefläche verschwenkbar angeordnet ist, kann der nunmehr gerichtete, geschnittene und vermessene Stab aus der Ablagevorrichtung in einfacher Weise durch Verschwenken der Auflageflächen nach unten weiter transportiert werden.

Weitere Einzelheiten und Vorteile der Erfindung werden anhand der Figurenbeschreibung unter Bezugnahme auf die in den Zeichnungen dargestellten Ausführungsbeispiele nachfolgend näher erläutert.

Darin zeigt
- Fig. 1: eine Richtmaschine;
- Fig. 2a, 2b: unterschiedliche Ausführungsbeispiele einer erfindungsgemäßen Abtastvorrichtung;
- Fig. 3a, 3b: eine Vorderansicht und eine Perspektive auf den Auslauf;
- Fig. 4a: einen vergrößerten Ausschnitt aus Fig. 3a;
- Fig. 4b: das aufgezeichnete Profil eines gemessenen Stabes;
- Fig. 5a, 5b: im Querschnitt die Lageposition unterschiedlich gebogener Stäbe in der Abtastvorrichtung;
- Fig. 6a: eine Prinzipskizze eines gebogenen Stabes in der Abtastvorrichtung und
- Fig. 6b: das aufgezeichnete Profil eines gebogenen Stabes

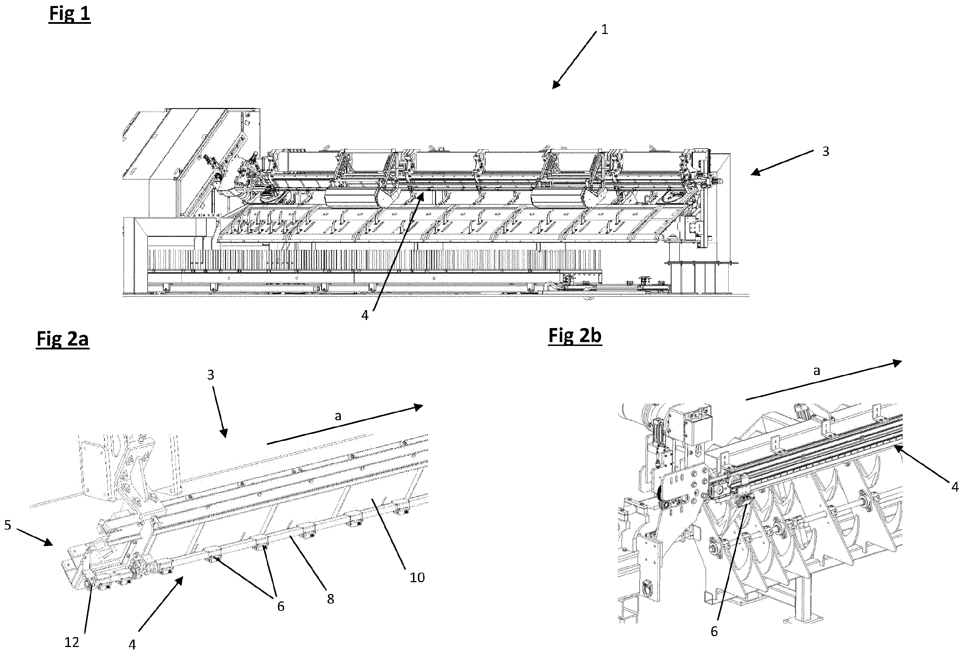

Bei der in Fig. 1 dargestellten Richtmaschine 1 ist die Abtastvorrichtung 4 im sogenannten Auslauf 3 der Richtmaschine 1 angeordnet. Im Unterschied zu den aus dem Stand der Technik bekannten Verfahren wird beim erfindungsgemäßen Verfahren der Stab 2 also nach dem Zuschneiden gemessen, was den Vorteil mit sich bringt, dass der Stab 2 über seine gesamte Länge vermessen wird, was bei den aus dem Stand der Technik bekannten Verfahren der Stab aufgrund der Anordnung der Abtastvorrichtung direkt nach dem Richtwerk und vor dem Schneiden nicht der Fall ist.

Bei dem in Fig. 2a gezeigten bevorzugten Ausführungsbeispiel der Erfindung weist die Abtastvorrichtung 4 eine über einen Motor 12 schwenkbare Welle 8 auf, an der mehrere Sensoren 6 angeordnet sind, auf. Die Welle 8 ist auf der Rückseite der Anlagefläche 10 derart angeordnet, dass die Sensoren 6 deckungsgleich mit den Durchtrittsöffnungen 11 in der Anlagefläche 10 sind, wobei sich die Durchtrittsöffnungen 11 über die gesamte Länge der Anlagefläche 10 in Längsrichtung a des zu messenden Stabes 2 erstrecken. Die Vermessung des Stabes 2 erfolgt also in einfacher Weise durch Verschwenken der Welle 8 und somit der Sensoren 6, wobei die Sensoren 6 während der Schwenkzyklus durch die Durchtrittsöffnungen 11 in der Anlagefläche 10 den Abstand des in der Ablagevorrichtung 5 befindlichen Stabes 2 messen können.

Ein alternatives Ausführungsbeispiel ist in Fig. 2b dargestellt. Bei diesem Ausführungsbeispiel der Erfindung wird der Sensor 6 linear zur Längsrichtung a des zu vermessenden Stabes 2 verfahren. Diese Anordnung bietet sich insbesondere dann an, wenn zur Messung ein bildbasierter Höhenvergleichssensor zum Einsatz kommt. Es wäre aber auch denkbar, einen laserbasierten Abstandssensor 6 linear in Längsrichtung a des Stabes 2 zu verfahren und in vorbestimmten Intervallen durch Verschwenkung eine Abstandsmessung durchzuführen.

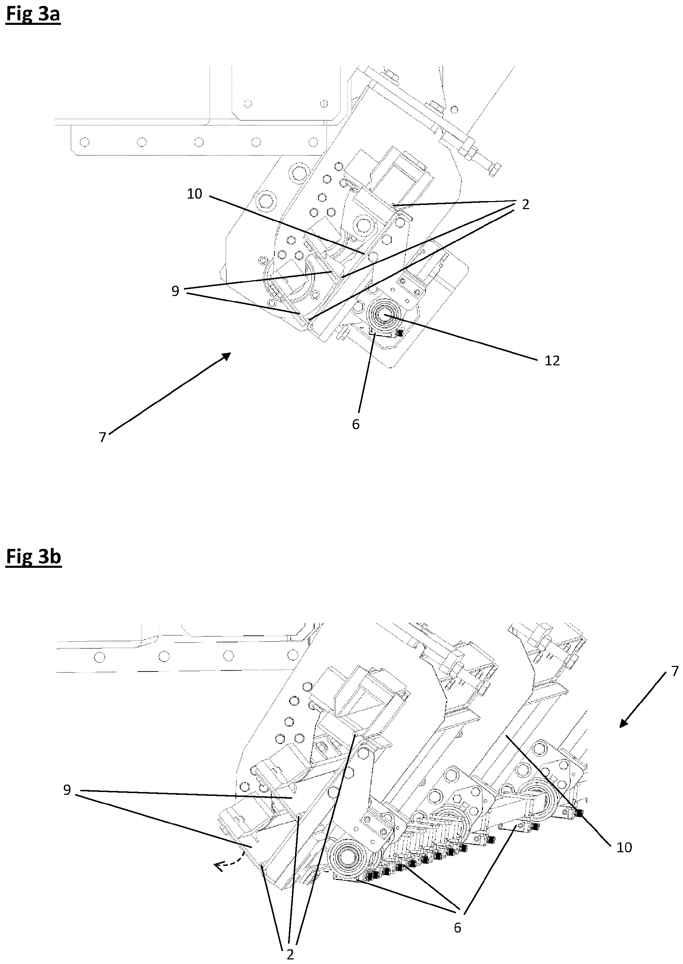

Die nachfolgenden Fig. 3a bis 6b beziehen sich alle auf das in Fig. 2a dargestellte, bevorzugte Ausführungsbeispiel.

Die Fig. 3a und 3b zeigen eine Ansicht und eine Perspektive der erfindungsgemäßen Vorrichtung 7 zur Messung der Eigenschaft eines Stabes 2.

Die im Auslauf der Richtmaschine 1 angeordnete Vorrichtung 7 weist beim gezeigten Ausführungsbeispiel eine Anlagefläche 10 und mehrere Auflageflächen 9 auf. Dabei sind die Auflageflächen 9 als schwenkbare Klappen ausgebildet. Die Richtmaschine 1 produziert die Stäbe 2 in der Produktionslinie. Nach erfolgtem Schnitt bleibt der Stab 2 in der Produktionslinie liegen. Das ist beim gezeigten Ausführungsbeispiel die oberste schwenkbare Auflagefläche 9. Durch Schwenken der Auflagefläche 9 nach unten (in Pfeilrichtung) werden die geschnittenen Stäbe 2 in der Vorrichtung nach unten befördert, wobei die schwenkbaren Auflageflächen 9 bei der Beförderung des Stabes 2 von oben nach unten zusätzlich als Puffer wirken. Am unteren Ende der Vorrichtung 7 befinden sich an der von der Auflagefläche 9 abgewandten Seite der Anlagefläche 10 die an einer schwenkbaren Welle 8 angeordneten Sensoren 6. Die Sensoren 6 können durch die Durchtrittsöffnungen 11 in der Anlagefläche 10 den Abstand des sich in der untersten Ablagevorrichtung 5 befindlichen Stabes 2 messen.

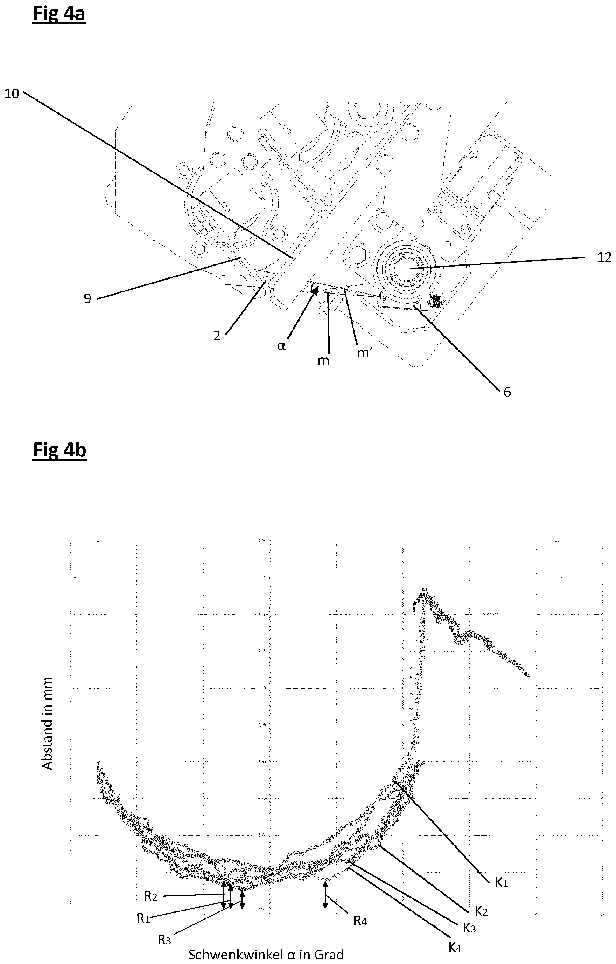

Fig. 4a veranschaulicht das Messprinzip. Der Stab 2 liegt in der untersten Ablagevorrichtung 5 zwischen der Auflagefläche 9 und der Anlagefläche 10. Der Sensor 6 wird mit der Welle 8 über den Motor 12 verschwenkt und zeichnet während des Schwenkzyklus den Abstand zum Stab 2 auf. Der Schwenkzyklus startet dabei in der Nullposition mit dem Messstrahl m und endet nach Durchlaufen des Schwenkwinkels α mit dem Messstrahl m'. Während des Durchlaufs des Schwenkzyklus misst der Sensor 6 den Abstand zum Stab 2 und zeichnet dadurch ein Abstandprofil in Bezug auf den Schwenkwinkel α auf.

In Fig. 4b ist ein aufgezeichnetes Abstandsprofil des Stabes 2 dargestellt. Die Kurven K1 bis K4 entsprechen den Messergebnissen von in Längsrichtung des Stabes 2 hintereinander angeordneten Sensoren 6. Auf der X-Achse ist der Schwenkwinkel α in Grad angegeben, auf der Y-Achse der gemessene Abstand in mm, wobei die Messung von rechts nach links erfolgt.

Der Messstrahl m trifft also zuerst auf die Anlagefläche 9 auf, sodass der Abstand beim Schwenken des Sensors 6 zuerst größer wird, bis der Messstrahl m auf den Stab 2 trifft. Durch die runde Oberfläche des Stabes 2 wird der Abstand zunächst immer kleiner, bis der Messstrahl m den Scheitelpunkt überschreitet und der Abstand wieder größer wird, bis, nach Durchlauf des Schwenkwinkels α, der Messstrahl m von der Oberfläche des Stabes 2 abreißt und wiederum auf die Auflagefläche 9 (im Diagramm nicht mehr ersichtlich) trifft.

Beim gezeigten Ausführungsbeispiel wird also von jedem Sensor 6 ein Lageprofil in Form eines Abstandsprofiles des zu vermessenden Stabes 2 in Bezug auf den Schwenkwinkel α des Sensors 6 erstellt und in weiterer Folge als Referenzwert R1 bis R4 der Minimalwert der sich ergebenden Kurven K1 bis K4 abgeleitet.

Die so ermittelten Referenzwerte R1 bis R4 werden in weiterer Folge in Relation zueinandergesetzt. Liegen die ermittelten Referenzwerte R1 bis R4 alle innerhalb einer Toleranzgrenze, idealerweise sogar an derselben Stelle, ist das Messergebnis ein gerader Stab. Überschreitet einer oder mehrere der ermittelten Referenzwerte R1 bis R4 diese Toleranzgrenze, ist das Messergebnis ein ungerader bzw. gebogener Stab.

Mit dem erfindungsgemäßen Verfahren kann also in einfacher Weise Ausschussware bestimmt werden und gleichzeitig kann man mit der Erfindung auch die bereits auf dem Stand der Technik bekannten Bedürfnisse der Anpassung der Richtmaschine aufgrund der ermittelten Referenzwerte abdecken.

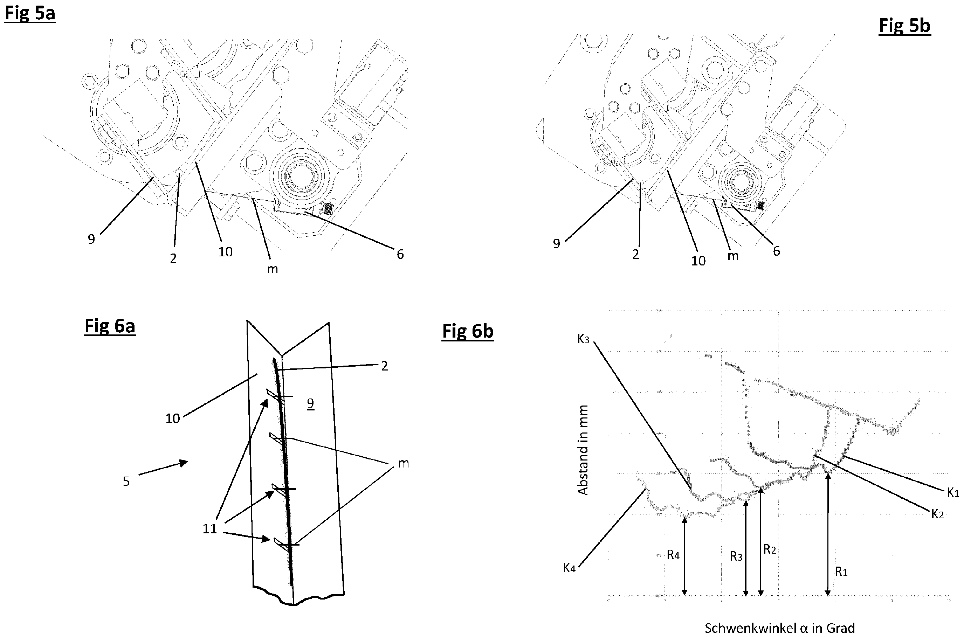

Die Fig. 5a zeigt die Lage eines nach oben gebogenen Stabes 2 in der Ablagevorrichtung, während die Fig. 5b die Lage eines nach unten gebogenen Stabes 2 in der Ablagevorrichtung darstellt.

Die Fig. 6a zeigt schematisch in einer Draufsicht einen in der Ablagevorrichtung 5 liegenden, nach oben gebogenen Stab 2. Die Messung erfolgt wiederum über einen abstandsbasierten Lasersensor (nicht gezeigt). Während des Verschwenkens der Welle 8 treten die Messstrahlen m der Sensoren 6 durch die Durchtrittsöffnungen 11 in der Anlagefläche 10 durch und treffen während des Schwenkzyklus zuerst auf die Auflagefläche 9, dann auf den Stab 2 und danach wieder auf die Auflagefläche 9.

Analog zu Fig. 4b sind in der Fig. 6b die sich ergebenden Abstandsprofile der Messungen eines gebogenen Stabes 2 dargestellt. Wiederum trifft der Messstrahl m zuerst auf die Auflagefläche 9, der Abstand wird dann kleiner, wenn der Messstrahl m auf den Stab 2 trifft, wobei sich bei dieser Messung eines gebogenen Stabes 2 die Kurven K1 bis K4, die wiederum von in Längsrichtung des Stabes 2 hintereinander angeordneten Sensoren 6 gemessen wurden, nicht decken. Die ermittelten Referenzwerte R1 bis R4 unterscheiden sich beträchtlich und liegen außerhalb der Toleranzgrenze, sodass das Messergebnis des in Fig. 6 dargestellten Messprofils einen gebogenen Stab 2 ergibt.

Wenn auch die Erfindung anhand des gezeigten Ausführungsbeispiels konkret beschrieben wurde, versteht es sich von selbst, dass der Anmeldungsgegenstand nicht auf dieses Ausführungsbeispiel beschränkt ist. Vielmehr sind Maßnahmen und Abwandlungen, die dazu dienen, den Erfindungsgedanken zu ersetzen, durchaus denkbar und erwünscht. So könnte die erfindungsgemäße Vorrichtung zum Durchführen des Verfahrens beispielsweise völlig entkoppelt von einer Richtmaschine zum Einsatz kommen und beispielsweise isoliert von der Herstellung zur Messung der Geradheit von Bewehrungsstäben dienen.

## Patentansprüche

1. Verfahren zur Messung wenigstens einer Eigenschaft, insbesondere der Geradheit, wenigstens eines von mittels einer Richtmaschine (1), insbesondere Rotorrichtmaschine, gerichteten Stabs (2), insbesondere Bewehrungsstabs, wobei die wenigstens eine Eigenschaft des wenigstens einen gerichteten Stabs nach dem Auslauf (3) der Richtmaschine (1) mittels wenigstens einer berührungslos arbeitenden Abtastvorrichtung (4) gemessen wird, **dadurch gekennzeichnet, dass** der geschnittene Stab (2) in einer Ablagevorrichtung (5) abgelegt wird und die Messung der wenigstens einen Eigenschaft des Stabs (2) mittels der wenigstens einen berührungslos arbeitenden Abtastvorrichtung (4) erfolgt, während der Stab (2) in der Ablagevorrichtung (5) abgelegt ist.

2. Verfahren nach Anspruch 1, **dadurch gekennzeichnet, dass** zum Messen der Eigenschaft des Stabs (2) die Lage des Stabs (2) unverändert bleibt und die Abtastvorrichtung (4) relativ zum Stab (2) bewegt wird.

3. Verfahren nach Anspruch 2, **dadurch gekennzeichnet, dass** die Abtastvorrichtung (4) relativ zum Stab (2) radial und/oder parallel zu einer Längsrichtung (a) des Stabs (2) bewegt wird.

4. Verfahren nach Anspruch 1, **dadurch gekennzeichnet, dass** zum Messen der Eigenschaft des Stabs (2) die Lage der Abtastvorrichtung (4) unverändert bleibt und der Stab (2) relativ zur Abtastvorrichtung (4) vorzugsweise radial bewegt wird.

5. Verfahren nach einem der Ansprüche 1 bis 4, **dadurch gekennzeichnet, dass** die Messung der Eigenschaft mittels wenigstens eines Sensors (6), vorzugsweise eines abstandbasierten Lasersensors, erfolgt.

6. Verfahren nach einem der Ansprüche 1 bis 5, **dadurch gekennzeichnet, dass** die Abtastvorrichtung (4) mehrere Sensoren (6) umfasst, wobei aus den Messwerten der einzelnen Sensoren (6) jeweils ein Lageprofil des zu vermessenden Stabs (2) erstellt und ein Referenzwert (R) abgeleitet wird und die so ermittelten Referenzwerte (R) der einzelnen Lageprofile in Relation zueinander gesetzt werden.

7. Verfahren nach Anspruch 6, **dadurch gekennzeichnet, dass** als Lageprofil ein Abstandsprofil des zu vermessenden Stabs (2) in Bezug auf den Schwenkwinkel (α) des Sensors (6) erstellt wird und als Referenzwert (R) der Minimalwert der sich ergebenden Kurve (K₁, K2, K3, K4) abgeleitet wird.

8. Verfahren nach Anspruch 6 oder 7, **dadurch gekennzeichnet, dass** die Referenzwerte (R) einer Regeleinrichtung für die Richtmaschine (1) übermittelt werden und die Richtelemente der Richtmaschine (1) in Abhängigkeit der Referenzwerte (R) justiert werden.

9. Vorrichtung (7) zur Messung wenigstens einer Eigenschaft, insbesondere der Geradheit, wenigstens eines von mittels einer Richtmaschine (1) gerichteten Stabs (2), insbesondere Bewehrungsstabs, wobei die Vorrichtung (7) wenigstens eine berührungslos arbeitende Abtastvorrichtung (4) umfasst, insbesondere zur Durchführung eines Verfahrens nach einem der Ansprüche 1 bis 8, **dadurch gekennzeichnet, dass** die Vorrichtung (7) eine Ablagevorrichtung (5) für den gerichteten und geschnittenen Stab (2) aufweist und die wenigstens eine berührungslos arbeitende Abtastvorrichtung (4) relativ zur Ablagevorrichtung (5) bewegbar, vorzugsweise an der Ablagevorrichtung (5), angeordnet ist.

10. Vorrichtung nach Anspruch 9, **dadurch gekennzeichnet, dass** die Abtastvorrichtung (4) radial bewegbar, vorzugsweise schwenkbar, an der Ablagevorrichtung (5) angeordnet ist.

11. Vorrichtung nach einem der Ansprüche 9 oder 10, **dadurch gekennzeichnet, dass** die Abtastvorrichtung (4) mehrere Sensoren (6), vorzugsweise abstandsbasierte Lasersensoren aufweist, die auf einer drehbar gelagerten Welle (8) angeordnet sind.

12. Vorrichtung nach Anspruch 11, **dadurch gekennzeichnet, dass** die Ablagevorrichtung (5) eine Auflagefläche (9) und eine Anlagefläche (10) für den zu messenden Stab (2) aufweist, wobei die Auflagefläche (9) und die Anlagefläche (10) einen Winkel kleiner 120°, vorzugsweise von 85°, einschließen und die Anlagefläche (10) mehrere, vorzugsweise schlitzförmige, Durchtrittsöffnungen (11) aufweist.

13. Vorrichtung nach Anspruch 11 oder 12, **dadurch gekennzeichnet, dass** die Abtastvorrichtung (4) auf der dem zu messenden Stab (2) abgewandten Seite der Anlagefläche (10) drehbeweglich gelagert ist, wobei die Sensoren (6) der Abtastvorrichtung (4) im Bereich der Durchtrittsöffnungen (11), vorzugsweise deckungsgleich, angeordnet sind.

14. Vorrichtung nach Anspruch 13, **dadurch gekennzeichnet, dass** im Bereich jeder Durchtrittsöffnung (11) ein Sensor (6) angeordnet ist.

15. Vorrichtung nach einem der Ansprüche 12 bis 14, **dadurch gekennzeichnet, dass** die Auflagefläche (9) relativ zur Anlagefläche (10) verschwenkbar angeordnet ist.

## Geänderte Patentansprüche

### Geänderte Patentansprüche gemäss Regel 137(2) EPÜ.

1. Verfahren zur Messung wenigstens einer Eigenschaft, insbesondere der Geradheit, wenigstens eines von mittels einer Richtmaschine (1), insbesondere Rotorrichtmaschine, gerichteten Stabs (2), insbesondere Bewehrungsstabs, wobei die wenigstens eine Eigenschaft des wenigstens einen gerichteten Stabs nach dem Auslauf (3) der Richtmaschine (1) mittels wenigstens einer berührungslos arbeitenden Abtastvorrichtung (4) gemessen wird, **dadurch gekennzeichnet, dass** der geschnittene Stab (2) in einer Ablagevorrichtung (5) abgelegt wird und die Messung der wenigstens einen Eigenschaft des Stabs (2) mittels der wenigstens einen berührungslos arbeitenden Abtastvorrichtung (4) erfolgt, während der Stab (2) in der Ablagevorrichtung (5) abgelegt ist, wobei die Abtastvorrichtung (4) mehrere Sensoren (6) umfasst, wobei die Sensoren (6) in einer Längsrichtung (a) des Stabs (2) hintereinander angeordnet sind, wobei aus den Messwerten der einzelnen Sensoren (6) jeweils ein Lageprofil des zu vermessenden Stabs (2) erstellt und ein Referenzwert (R) abgeleitet wird und die so ermittelten Referenzwerte (R) der einzelnen Lageprofile in Relation zueinander gesetzt werden.

2. Verfahren nach Anspruch 1, **dadurch gekennzeichnet, dass** zum Messen der Eigenschaft des Stabs (2) die Lage des Stabs (2) unverändert bleibt und die Abtastvorrichtung (4) relativ zum Stab (2) bewegt wird.

3. Verfahren nach Anspruch 2, **dadurch gekennzeichnet, dass** die Abtastvorrichtung (4) relativ zum Stab (2) radial und/oder parallel zu einer Längsrichtung (a) des Stabs (2) bewegt wird.

4. Verfahren nach Anspruch 1, **dadurch gekennzeichnet, dass** zum Messen der Eigenschaft des Stabs (2) die Lage der Abtastvorrichtung (4) unverändert bleibt und der Stab (2) relativ zur Abtastvorrichtung (4) vorzugsweise radial bewegt wird.

5. Verfahren nach einem der Ansprüche 1 bis 4, **dadurch gekennzeichnet, dass** die Messung der Eigenschaft mittels wenigstens eines Sensors (6), vorzugsweise eines abstandbasierten Lasersensors, erfolgt.

6. Verfahren nach einem der Ansprüche 1 bis 5, **dadurch gekennzeichnet, dass** als Lageprofil ein Abstandsprofil des zu vermessenden Stabs (2) in Bezug auf den Schwenkwinkel (α) des Sensors (6) erstellt wird und als Referenzwert (R) der Minimalwert der sich ergebenden Kurve (K1, K2, K3, K4) abgeleitet wird.

7. Verfahren nach Anspruch 5 oder 6, **dadurch gekennzeichnet, dass** die Referenzwerte (R) einer Regeleinrichtung für die Richtmaschine (1) übermittelt werden und die Richtelemente der Richtmaschine (1) in Abhängigkeit der Referenzwerte (R) justiert werden.

8. Vorrichtung (7) zur Messung wenigstens einer Eigenschaft, insbesondere der Geradheit, wenigstens eines von mittels einer Richtmaschine (1) gerichteten Stabs (2), insbesondere Bewehrungsstabs, wobei die Vorrichtung (7) wenigstens eine berührungslos arbeitende Abtastvorrichtung (4) umfasst, insbesondere zur Durchführung eines Verfahrens nach einem der Ansprüche 1 bis 7, **dadurch gekennzeichnet, dass** die Vorrichtung (7) eine Ablagevorrichtung (5) für den gerichteten und geschnittenen Stab (2) aufweist und die wenigstens eine berührungslos arbeitende Abtastvorrichtung (4) relativ zur Ablagevorrichtung (5) bewegbar, vorzugsweise an der Ablagevorrichtung (5), angeordnet ist, wobei die Abtastvorrichtung (4) mehrere Sensoren (6) umfasst, wobei die Sensoren (6) in einer Längsrichtung (a) des Stabs (2) hintereinander angeordnet sind.

9. Vorrichtung nach Anspruch 8, **dadurch gekennzeichnet, dass** die Abtastvorrichtung (4) radial bewegbar, vorzugsweise schwenkbar, an der Ablagevorrichtung (5) angeordnet ist.

10. Vorrichtung nach einem der Ansprüche 8 oder 9, **dadurch gekennzeichnet, dass** die Abtastvorrichtung (4) mehrere Sensoren (6), vorzugsweise abstandsbasierte Lasersensoren aufweist, die auf einer drehbar gelagerten Welle (8) angeordnet sind.

11. Vorrichtung nach Anspruch 10, **dadurch gekennzeichnet, dass** die Ablagevorrichtung (5) eine Auflagefläche (9) und eine Anlagefläche (10) für den zu messenden Stab (2) aufweist, wobei die Auflagefläche (9) und die Anlagefläche (10) einen Winkel kleiner 120°, vorzugsweise von 85°, einschließen und die Anlagefläche (10) mehrere, vorzugsweise schlitzförmige, Durchtrittsöffnungen (11) aufweist.

12. Vorrichtung nach Anspruch 10 oder 11, **dadurch gekennzeichnet, dass** die Abtastvorrichtung (4) auf der dem zu messenden Stab (2) abgewandten Seite der Anlagefläche (10) drehbeweglich gelagert ist, wobei die Sensoren (6) der Abtastvorrichtung (4) im Bereich der Durchtrittsöffnungen (11), vorzugsweise deckungsgleich, angeordnet sind.

13. Vorrichtung nach Anspruch 12, **dadurch gekennzeichnet, dass** im Bereich jeder Durchtrittsöffnung (11) ein Sensor (6) angeordnet ist.

14. Vorrichtung nach einem der Ansprüche 11 bis 13, **dadurch gekennzeichnet, dass** die Auflagefläche (9) relativ zur Anlagefläche (10) verschwenkbar angeordnet ist.
